# EUROPEAN PATENT APPLICATION

(11) **EP 1 511 236 A1**
(43) Date of publication of application: **02.03.2005**
(21) Application number: 03756117.2
(22) Date of filing: 30.05.2003
(51) Int. Cl.: H04L 12/56

(54) **PACKET TRANSFER CIRCUIT AND PACKET TRANSFER METHOD**

(30) Priority: 30.05.2002 JP 2002157333; 31.05.2002 JP 2002160579
(71) Applicant: MATSUSHITA ELECTRIC INDUSTRIAL CO., LTD., Kadoma-shi, Osaka 571-8501 (JP)
(72) Inventor: KANAZAWA, Takeshi, Yokohama-shi, Kanagawa 240-0026 (JP)
(74) Representative: Grünecker, Kinkeldey, Stockmair & Schwanhäusser Anwaltssozietät
(86) International application number: PCT/JP2003/006809
(87) International publication number: WO 2003/103234

(57) **Abstract**

Inputter 191 sorts and accommodates packets in a plurality of containers 193. Containers 193 contain the packets in a plurality queues 1931 in and from which the packets can be written and read. Read controller 194 has read queue information generator 1941 that, on a per container basis, generates read queue information indicating the queues that have the packets written therein, priority determiner 1940 that, on a per queue basis, determines the priorities in the reading of the packets, and read queue determiner 1942 that, on a per container basis, determines the queue to read the packets from with reference to the write queue information and the priorities.

## Description

### Technical Field

The present invention relates to a packet transport circuit and a packet transport method for outputting packets memorized in a plurality of queues.

### Background Art

Packet transport apparatuses employing VOQ (Virtual Output Queuing) methods have been in use over the recent years for improved throughput of packet transport apparatuses.

A packet transport apparatus employing the VOQ method has a plurality of receivers for receiving packets and a plurality of transmitters for transmitting the packets, and is designed to have the received packets queued in the VOQ's provided in the receivers.

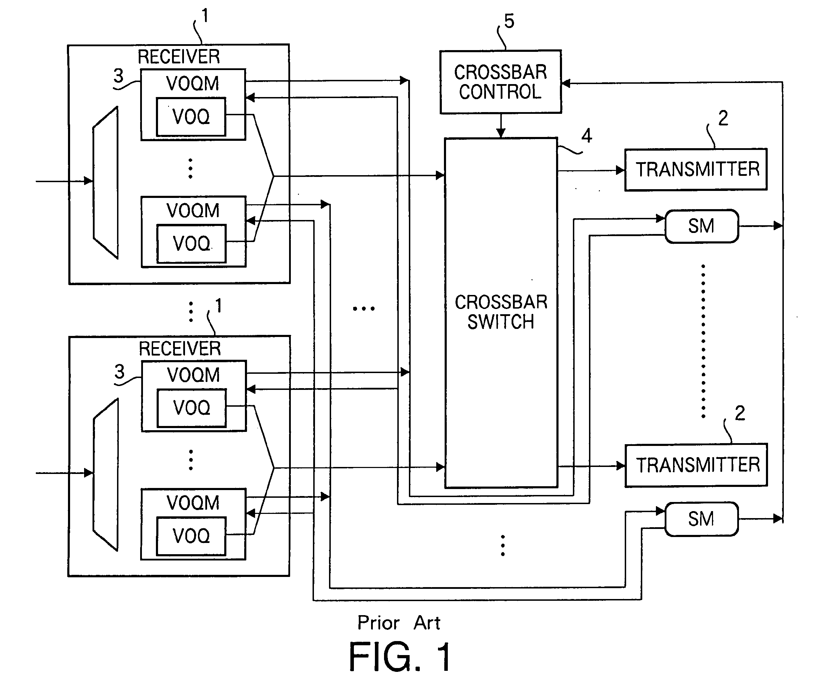

Published Unexamined Japanese Patent Application No.2001-7822 discloses a packet transport apparatus of the above prior art type. As shown in FIG.1, this packet transport apparatus is provided with VOQM (VOQ Module) 3, each having VOQ corresponding to transmitter 2 in receiver 1.

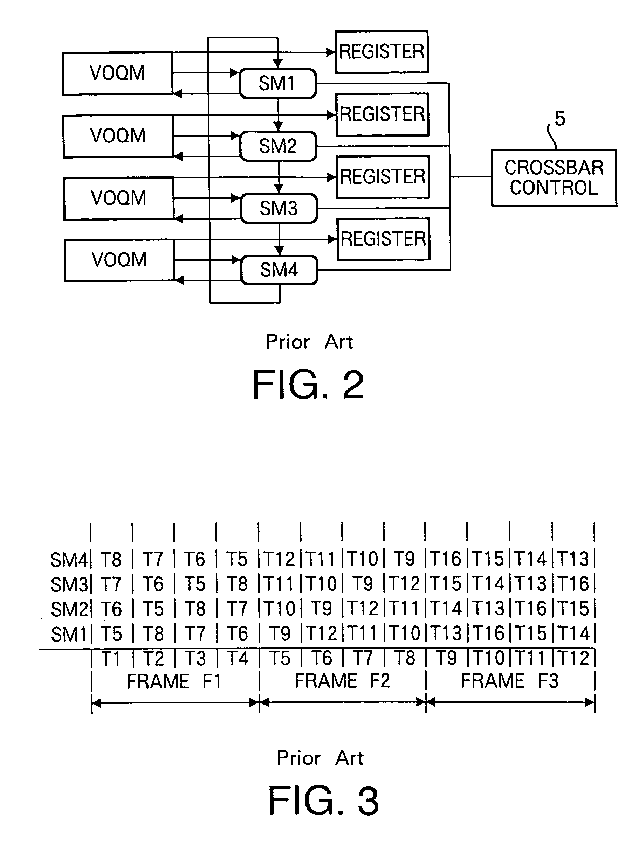

When the VOQ queues packets, as shown in FIG.2, VOQM 3 reports the queuing of the packets to an SM (Scheduler Module) corresponding to a transmitter. Each SM orders one VOQM 3 having packets queued therein to output the packets to crossbar switch 4 provided between transmitter 2 and receiver 1. Crossbar control 5 executes a control such that transmitter 2 corresponding to the SM, and receiver 1 having VOQM 3 that ordered crossbar switch 4 to output the packets, will connect.

The opportunity to switch crossbar switch 4 comes after every predetermined period of time slots. As shown in FIG.3, each SM determines, for every frame formed with a plurality of time slots, the VOQ to output packets in each time slot of the next frame. FIG.3 shows the operation of a scheduler in a packet transport apparatus having four transmitters 4 and four receivers 1. FIG.3 illustrates a case where one frame is formed with four time slots and where four SM's (i.e. SM1-SM4) determine the VOQ to output packets in each time slot of the next frame. In time slot T1 of frame F1, SM1 determines the VOQ to output packets in time slot T5 of frame F2.

As described above, in time slot T1, SM1 determines the VOQ to output packets in time slot T5 of frame F2, and reports the determined VOQ to SM2. In addition, SM1 is reported as to which VOQ is determined to output packets in time slot T8.

In time slot T2, SM1 determines the VOQ to output packets in time slot T8 of frame F2 from among VOQ' s other than the VOQ reported from SM4, and reports to SM2 the VOQ reported from SM4 and the VOQ that SM1 determined in time slot T2.

Thus, in each frame of each time slot, the SM determines the VOQ to output packets in each time slot of the next frame, and reports the result to the following SM's. The configuration connects the SM's like a pipeline, so that the VOQ' s determined by earlier SM's can be also reported. In each time slot, the VOQ's that have been determined to output packets are reported between the time slots, so as to prevent a plurality of VOQ's in the same receiver 1 from outputting packets to crossbar switch 4.

Each SM's determination will be reported to the VOQM's. Each VOQM memorizes in which time slot to output packets, in a register. Then, each VOQM makes reference to the register, and, in the time slot to output packets, outputs packets from the VOQ to the crossbar switch.

The examples of FIG.2 and FIG.3 show examples of a packet transport apparatus having four transmitters 2 and four transmitters 1. As shown in FIG.3, in time slot T1, SM1 determines the receiver that connects with the transmitter corresponding to SM1 in time slot T5. SM2-SM3 have not yet determined the receivers to connect with the transmitters that respectively correspond to the SM's in time slot T5, and so SM1 makes a determination in time slot T5 with highest priority.

In time slot T1, SM2-SM4 also each have a time slot where SM2-SM4 determine the receivers to connect with the corresponding transmitters with highest priority. SM2 holds priority in time slot T6. SM3 holds priority in time slot T7. SM4 holds priority in time slot T8. In time slot T2, each SM determines the receiver to connect with the corresponding transmitter in the time slot of the second priority, and, while the priority lowers towards time slot T4, determines the receiver to connect with the corresponding transmitter in each time slot.

As described above, the connections between the transmitters and receivers are determined on a per frame basis, the frame being formed with the same number of time slots as the SM' s, and each SM makes determinations in time slots of the highest priority to the lowest priority. As a result, each SM can determine the connection between the receiver and the corresponding transmitter on a fair basis.

Moreover, the packet transport apparatus disclosed in Published Unexamined Japanese Patent Application No.2001-168869 is known as a prior art for determining queues to output packets. Published Unexamined Japanese Patent Application No.2001-168869 discloses a bandwidth share control method and a packet transport circuit that make possible minimum bandwidth guarantee, the sharing of unoccupied bandwidth between users, and fairness.

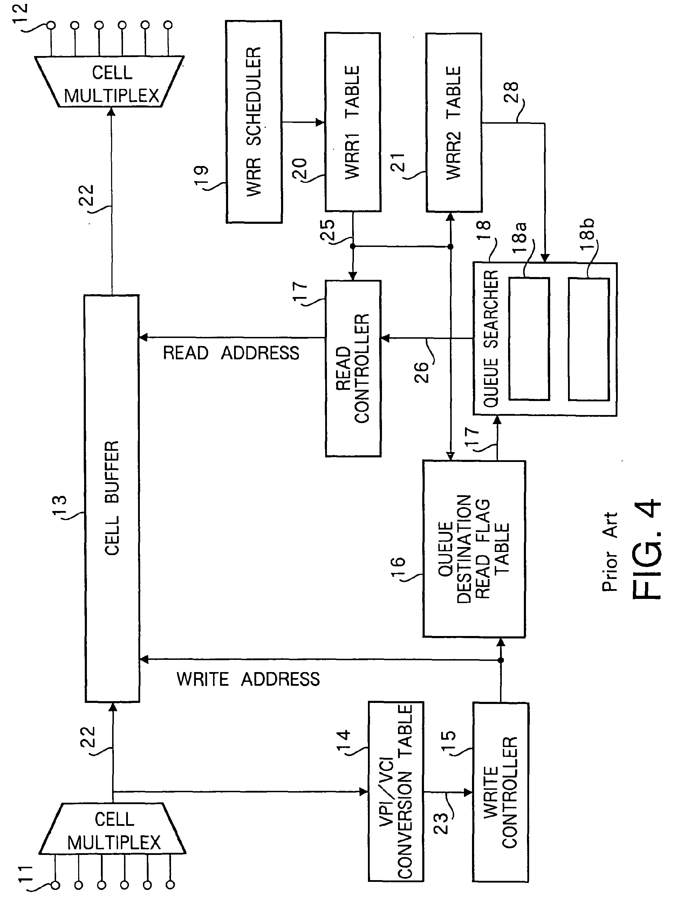

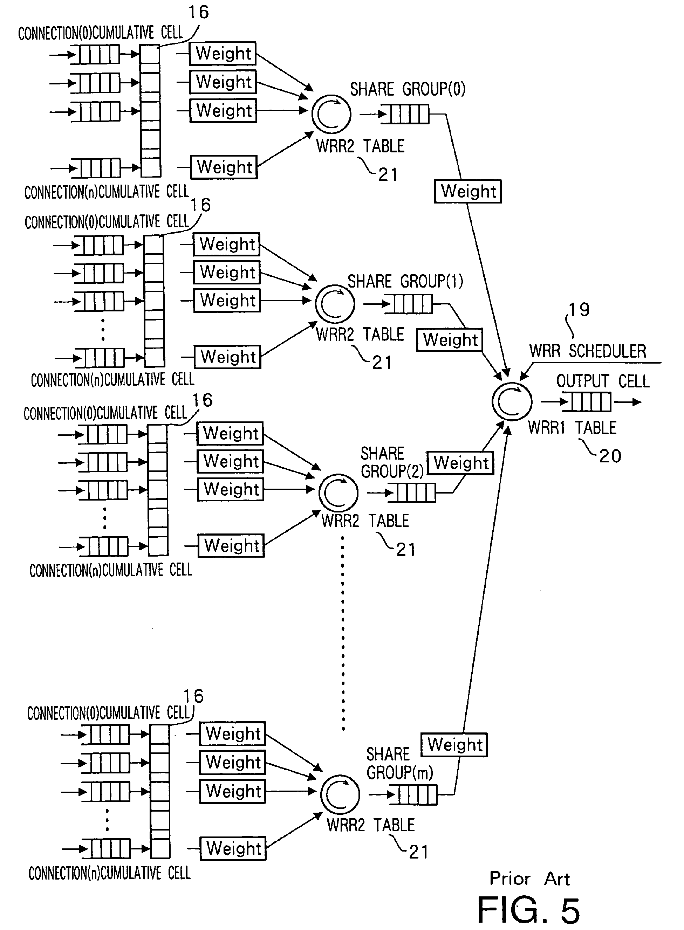

FIG.4 is a block diagram showing a configuration of a prior art packet transport apparatus disclosed in Published Unexamined Japanese Patent Application No.2001-168869. FIG.5 is a figure for explaining a control algorithm in the prior art packet transport apparatus.

As shown in FIG.4, cells from a plurality of input paths 11 are multiplexed, and, thereafter, when VPI (Virtual Path Identifier) and VCI (Virtual Channel Identifier) are extracted as output information from each of multiplexed cells 22, converted into input share group/connection information 23 in VPI/VCI conversion table 14, and, in this state, given to write controller 15. Based on this input share group/connection information 23, an write address into cell buffer 13 is created by write controller 15. Consequently, each multiplexed cell 22 is contained in cell buffer 13 on a per input share group basis and on a per connection basis.

In addition, by virtue of the write address from write controller 15, in queue destination read flag table 16, information indicating as to whether or not cell 22 is temporarily accommodated in cell buffer 13, as queue destination read information 17, on a per input share group basis and on a per connection basis.

Thus, each cell 22 is temporarily accommodated in cell buffer 13, and thereafter each cell 22 is read from this cell buffer 13 through a read address provided from read controller 17 and then separated so as to be outputted to intended output path 12.

Read controller 17 generates the read address for cell buffer 13 from output share group information 25 and connection information 26. Through read address 24 provided fromWRR scheduler 19 that circulates on a regular cycle, output share group information 25 is supplied from WRR (Weighted Round Robin)1 table 20 to read controller 17. With this output share group information 25 as the read address, connection cell output capacity information 28 within the output share group is read from WRR2 table 21.

Likewise, with output share group information 25 as the read address, information as to whether or not a cell is temporarily accommodated on a per connection basis within the output share group, is read as queue destination read information 27, from queue destination read flag table 16. Next, from queue destination read information 27 and connection cell output capacity information 28 within the output share group, queue searcher 18 creates output connection information 26. This queue searcher 18 is provided with output connection determiner 18a utilizing a priority writer andwith search history memory 18b for memorizing priority writing results as search history.

Incidentally, as shown in FIG.5, the scheduling scheme of the prior art control algorithm includes WRR scheduler 19, WRR1 table 20, WRR2 table 21, and queue destination flag table 16.

That is to say, with the packet transport apparatus disclosed in Published Unexamined Japanese Patent Application No.2001-168869, WRR scheduler 19 that circulates on a regular cycle reads output share group information 25 from WRR1 table 20. In addition, with this packet transport apparatus, based on the information, connection cell output capacity information 28 within the output share group is read from WRR2 table 21, and output connection determiner 18a in queue searcher 18 determines the queue due to output.

Still, with the packet transport apparatus disclosed in Published Unexamined Japanese Patent Application No.2001-7822, the number of time slots forming one frame is the same as the number of SM's, and so an increase in the number of receivers and transmitters results in an increase in the number of time slots forming one frame. That is, with the packet transport apparatus disclosed in Published Unexamined Japanese Patent Application No.2001-7822, an increase in the number of receivers and transmitters is followed by an extension in the time of one frame, and the time each SM takes to determine the VOQ to output packets also extends, during which no packet is outputted from the VOQ, which then causes the problem of increased delay time.

Furthermore, the packet transport apparatus disclosed in Published Unexamined Japanese Patent Application No.2001-168869 is configured such that a search for outputting queues can be started only after information is read from two types of tables, and so queue searcher 78 has to wait until the reading from the two types of tables ends, which then causes the problem of increased time for determining the queues. In addition, with the packet transport apparatus disclosed in Published Unexamined Japanese Patent Application No.2001-168869, there is a problem that a section to start the operation of WRR scheduler 19 before packets are outputted from the queues, needs to be provided.

### Disclosure of Invention

In view of the problems described above, it is an object of the present invention to provide a high speed packet transport circuit and a packet transport method that determine connections between transmitters and receivers on a fair basis and that shorten delay time regardless of the number of the receivers and transmitters.

It is another object of the present invention to provide a packet transport circuit and a packet transport method that, upon dividing a plurality of queues into groups and managing the queues, select the queue due to output packets, at high speed, with simple configuration, without reading information from two types of tables.

According to one aspect of the present invention, a packet transport circuit has: a plurality of containers that respectively connect with corresponding output ports and accommodate packets in a plurality of queues in and from which the packets are written and read; an inputter that sorts the packets inputted through an input port and has the packets accommodated in the containers; and a read controller that, on a per container basis, determines a queue to read the packets from, reads the packets from the determined queue, and outputs the packets to the output ports, and the read controller furthermore has: a write queue information generator that, on a per container basis, generates write queue information indicating the queues having the packets written therein; a priority determiner that, on a per queue basis, determines priorities in the reading of the packets; and a read queue determiner that, on a per container basis, determines the queue to read the packets from, with reference to the write queue information and the priorities.

According to another aspect of the present invention, a packet transport method has: an input step of sorting a plurality of packets and accommodating the plurality of packets in a plurality of queues in a plurality of containers, the containers containing the plurality of queues in and from which the packets are written and read and respectively connected with corresponding output ports; a read control step of determining, on a per container basis, a queue to read the packets from, reading the packets from the determined queue, and outputting the packets to the output ports, and the read control step furthermore has: a write queue information generating step of generating, on a per container basis, write queue information indicating the queues having the packets written therein; a priority determining step of determining, on a per queue basis, priorities in the reading of the packets; and a read queue determining step of determining, on a per container basis, the queue to read the packets from with reference to the write queue information and the priorities.

According to yet another aspect of the present invention, a packet transport program implements a packet transport method on a computer, and this method has: an input step of sorting a plurality of packets and accommodating said plurality of packets in a plurality of queues in a plurality of containers, said containers containing said plurality of queues in and from which said packets are written and read and respectively connected with corresponding output ports; a read control step of determining, on a per container basis, a queue to read the packets from, reading said packets from the determined queue, and outputting said packets to said output ports, and the read control step furthermore has: a write queue information generating step of generating, on a per container basis, write queue information indicating the queues having the packets written therein; a priority determining step of determining, on a per queue basis, priorities in the reading of the packets; and a read queue determining step of determining, on a per container basis, said queue to read the packets from with reference to the write queue information and the priorities.

### Brief Description of Drawings

FIG.1 is a block diagram showing a configuration of a prior art packet transport apparatus;
FIG.2 is a block diagram showing a configuration of a scheduler in the prior art packet transport apparatus of FIG.1;
FIG.3 is a timing diagram for explaining operation of the scheduler of FIG.2;
FIG.4 is a block diagram showing a configuration of another prior art packet transport apparatus;
FIG.5 is a figure for explaining control algorithm in the another packet transport apparatus;
FIG.6 is a block diagram showing a configuration of a packet transport circuit according to a first embodiment of the present invention;
FIG.7 is a block diagram showing a detailed configuration of a read controller of the packet transport circuit of the first embodiment of the present invention;
FIG.8 is a block diagram showing a detailed configuration of a priority writer of the packet transport circuit of the first embodiment of the present invention;
FIG.9 is a block diagram showing a detailed configuration of a highest priority detector in the priority writer of FIG.8;
FIG.10 is a block diagram showing a configuration of a read queue determiner in the priority writer of FIG. 8;
FIG.11 is a figure for explaining relationship between read data amount and priority in the packet transport circuit of the first embodiment of the present invention;
FIG.12 is a block diagram showing a configuration of a packet transport circuit according to a second embodiment of the present invention;
FIG.13 is a block diagram showing a configuration of a priority determiner in the packet transport circuit of FIG.12;
FIG.14 is a block diagram showing a configuration of an individual threshold level memory and an individual writer in the packet transport circuit of FIG.12;
FIG.15 is a block diagram showing a configuration of a cumulative threshold level memory and a cumulative writer in the packet transport circuit of FIG.12;
FIG.16 is a block diagram showing a configuration of an output amount measurer in the packet transport circuit of FIG.12;
FIG.17 is a block diagram showing a configuration of a selection determiner of the packet transport circuit of FIG.12;
FIG.18 is a figure for explaining a first example of relationship between priority calculated by a priority calculator and output data amount, in the packet transport circuit of FIG.12;
FIG.19 is a figure for explaining a second example of relationship between priority calculated by a priority calculator and output data amount, in the packet transport circuit of FIG.12; and
FIG.20 is a figure for explaining a third example of relationship between priority calculated by a priority calculator and output data amount, in the packet transport circuit of FIG.12.

### Best Mode for Carrying Out the Invention

Embodiments of the present invention will be described in detail below with reference to the accompanying drawings.

### (First Embodiment)

The first embodiment of the packet transport circuit and the packet transport method of the present invention will be described in detail with reference to the accompanying drawings.

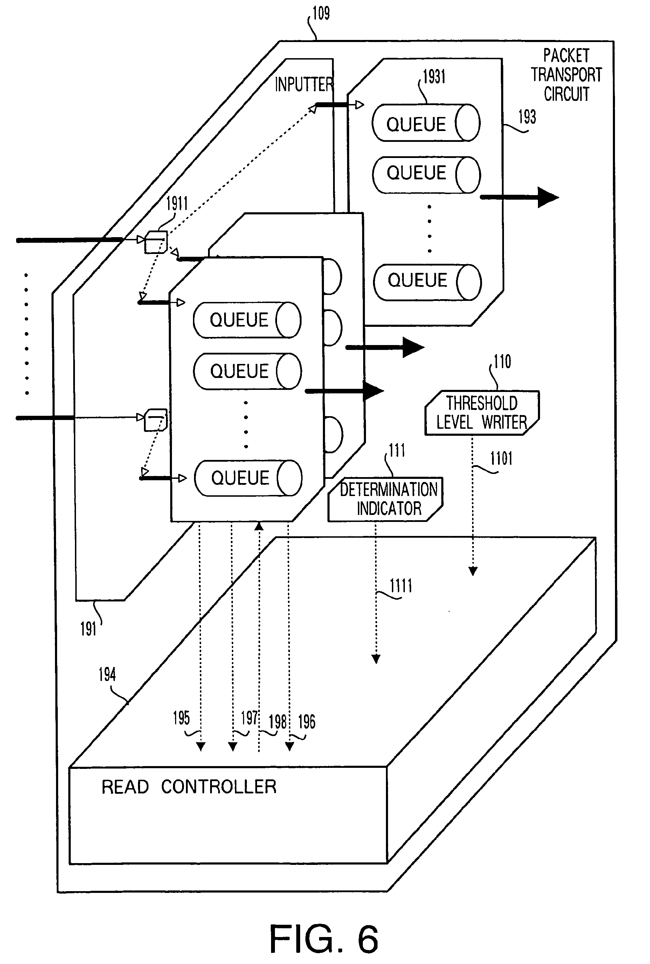

FIG.6 is a block diagram showing the configuration of the packet transport circuit of the first embodiment of the present invention. As shown in FIG.6, inputter 191 inpacket transport circuit 109 of the first embodiment connects with each output port of packet transport circuit via container 193. Inputter 191 is designed to pass a received packet to container 193 connected with the output port corresponding to the destination of the packet and to thus enable container 193 to transmit the packet.

As shown by the above configuration, packet transport circuit 109 is configured such that inputter 191 is able to pass received packets to a plurality of containers 193 that respectively connect with the output ports where the packets are transmitted to, while preventing the packets from interfering with each other. In addition, the above configuration enables a plurality of containers 193 to transmit the packets due to be transmitted without interfering with each other. As a result, high throughput can be realized.

A packet's destination corresponds with one of the multiple output ports of packet transport circuit 109. Received packet sorter 1911 provided in inputter 191 passes a received packet to container 193 connected with the output port corresponding to the destination of the received packet.

Container 193 has a plurality of queues 1931 that memorize the packets passed from inputter 191. Queues 1931 are given priorities in passing the packets to the output port. Container 193 reports write queue report information 195 representing the queue in which the packets are written, to read controller 194. Based on write queue report information 195, read controller 194 determines queue 1931 to read the packets from on a per container 193 basis, and provides read queue indicating information 198 representing determined queue 1931 on a per container 193 basis. Container 193 transmits the packets from queue 1931 represented by read queue indicating information 198 to the output port. Then, when the transmission of the packets is over, container 193 reports the amount of read data to read controller 194 as read amount information 197.

In addition, threshold level writer 110 and determination indicator 111 report setup from outside pertaining to packet transport circuit 109, to read controller 194. Packet transport circuit 109 is designed to set threshold level 1101 for each queue 1931, and, when the amount of read data from queue 1931 exceeds a second threshold level, set determining indication 1111 as to whether or not to stop the reading of the packets.

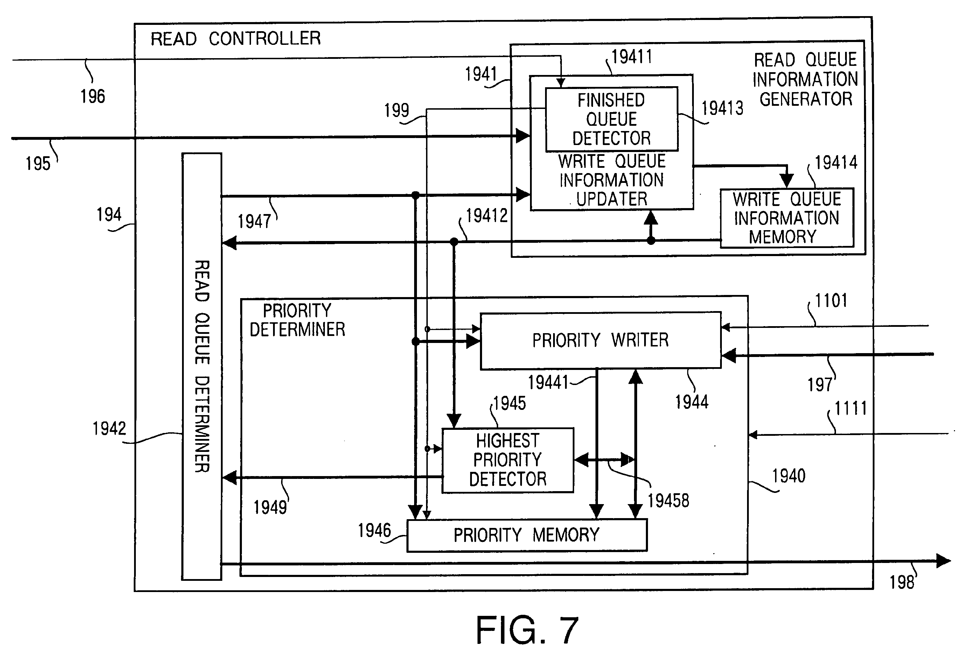

FIG.7-FIG.11 each show a detailed configuration of packet transport circuit 109. The various function blocks shown in FIG.7-FIG.11 can be built with either hardware or software. A case will be described here with the instant example where the various function blocks shown in FIG.7-FIG.11 are built with software, except for the memories that are built with memory devices. In other words, the premise here is that a program that implements the same operations as the following function blocks is held in a given location in the system for a computer to read and implement the program. Moreover, apart from building all the function blocks with software, if there are functions that require high speed processing and if hardwarecircuitconfiguration will achieve more superior system performance, it is also possible to configure the system by combining software and hardware.

FIG.7 is a block diagram showing a configuration of read controller 194. As shown in FIG. 7, read controller 194 has write queue information generator 1941, priority determiner 1940, and read queue determiner 1942. Write queue information generator 1941 generates write queue information 19412 representing queue 1931 having packets written therein, on a per container 193 basis. Priority determiner 1940 determines the priority in reading the packets, on a per queue 1931 basis. With reference to write queue information 19412 and the priority, read queue determiner 1942 reads the queue to read the packets from, on a per container 193 basis.

Write queue information generator 1941 has write queue information memory 19414 and write queue information updater 19411. Write queue information memory 19414 memorizes write queue information 19412, on a per container 193 basis. Write queue information updater 19411 updates write queue information 19412 memorized in write queue information memory 19414 according to the condition of packet writing in queue 1931.

Write queue information updater 19411 includes finished queue detector 19413 that detects queue 1931 that finishes outputting the packets, on a per container 193 basis. When write queue report information 195 representing the queue into which the writing from container 193 has been executed is reported, write queue information updater 19411 acquires write queue information 19412 of corresponding container 193 from write queue information memory 19414. Then, write queue information updater 19411 updates the packet writing condition of only queue 1931 represented by write queue report information 195, and reports updated write queue information 19412 to write queue information memory 19414.

Finished queue detector 19413 is given a report of read finish report information 196, which represents the end of the reading of the packets from container 193 where queue 1931 that has outputted the packets is accommodated, and which represents as to whether there are packets left in this queue 1931 after the end of the reading. When read finish report information 196 is reported, on a per container 193 basis, finished queue detector 19413 detects queue 1931 that finishes outputting the packets, from determined queue information 1947 reported from read queue determiner 1942, on a per container 193 basis. Then, finished queue detector 19413 reports the writing condition in this queue 1931 and in queue 1931 corresponding to container 193, and read finish report information 196, to write queue information updater 19411. Moreover, finished queue detector 19413 reports that the reading from queue 1931 that has been outputting the packets finishes, as finish queue detection information 199, to write queue information updater 19411 and to priority determiner 1940, on a per container 193 basis.

When finished queue detection information 199 is reported, write queue information updater 19411 acquires write queue information 19412 of the corresponding container from write queue information memory 19414. Then, write queue information updater 19411 updates the packet container condition of only queue 1931 that has finished outputting the packets, in accordance with the detection of finished queue detector 19413, and reports updated write queue information 19412 to write queue information memory 19414.

When updated read queue information 19412 is reported from read queue information updater 19411, read queue information memory 19414 memorizes updated read queue information 19412, on a per container 193 basis. Then, read queue information memory 19414 reports memorized read queue information 19412 to read queue determiner 1942 and to priority determiner 1940, on a per container 193 basis.

Priority determiner 1940 has priority memory 1946, priority writer 1944, and highest priority detector 1945. Priority memory 1946 memorizes the priorities of queues 1931, in a distinguishable manner, on a per container 193 basis. Priority writer 1944 has the priority of each queue 1931 written and memorized in priority memory 1946, on a per container 193 basis. With reference to read queue information 19412 and the priorities memorized in priority memory 1946, highest priority detector 1945 detects the highest priority among the priorities of queues 1931 having packets written therein, and reports the result to read queue determiner 1942.

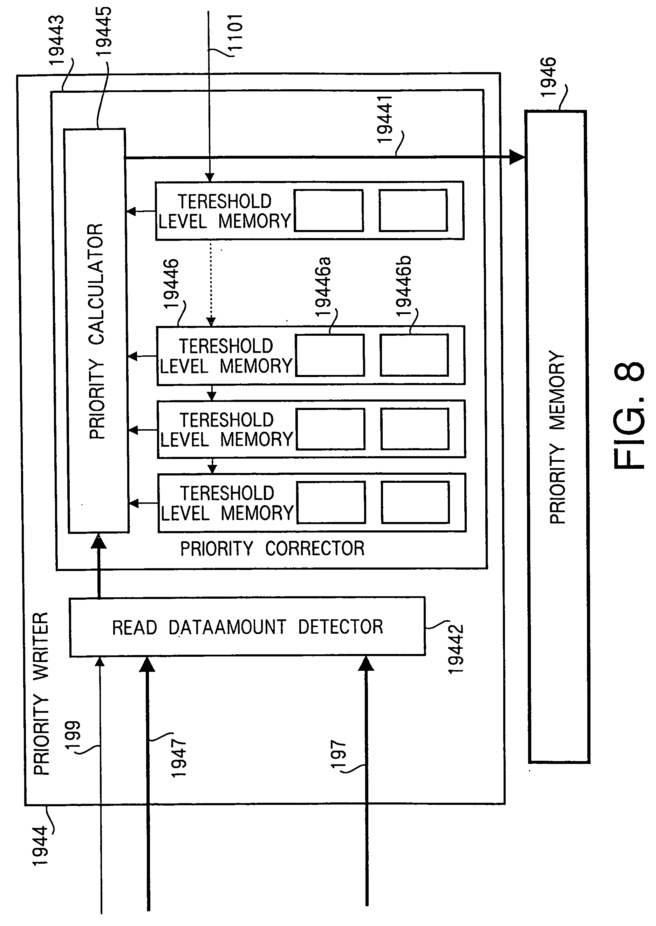

FIG.8 is a block diagram showing a configuration of prioritywriter 1944. As shown in FIG. 8, prioritywriter 1944 has read data amount detector 19442 and priority corrector 19443. Read data amount detector 19442 detects the amount of data read from each queue 1931, on a per container 193 basis. When read data amount detector 19442 detects a data amount that reaches the threshold level set on a per queue 1931 basis, priority corrector 19443 corrects and lowers the priority of this queue 1931 to apredeterminedpriority, andwrites it inprioritymemory 1946.

Read data amount detector 19442 detects the amount of data read from queue 1931 represented by finished queue detection information 1947. Then, read data amount detector 19442 combines this read data amount and read amount information 197 reported from container 193 containing queue 1931 that has been outputting the packets, and reports the result to priority corrector 19443.

When read data amount detector 19442 detects a data amount that reaches the threshold level set on a per queue 1931 basis, priority corrector 19443 corrects and lowers the priority of this queue 1931 to a predetermined priority, and writes the result in priority memory 1946. Threshold level memory 19446 of FIG.8 memorizes the predetermined threshold level set on a per queue 1931 basis. Likewise, with reference to the data amount detected by read data amount detector 19442 and queue 1931 that is memorized in threshold level memory 19446 and that has outputted the packets, priority calculator 19445 of FIG.8 calculates the priority of this queue and writes the result in priority memory 1946.

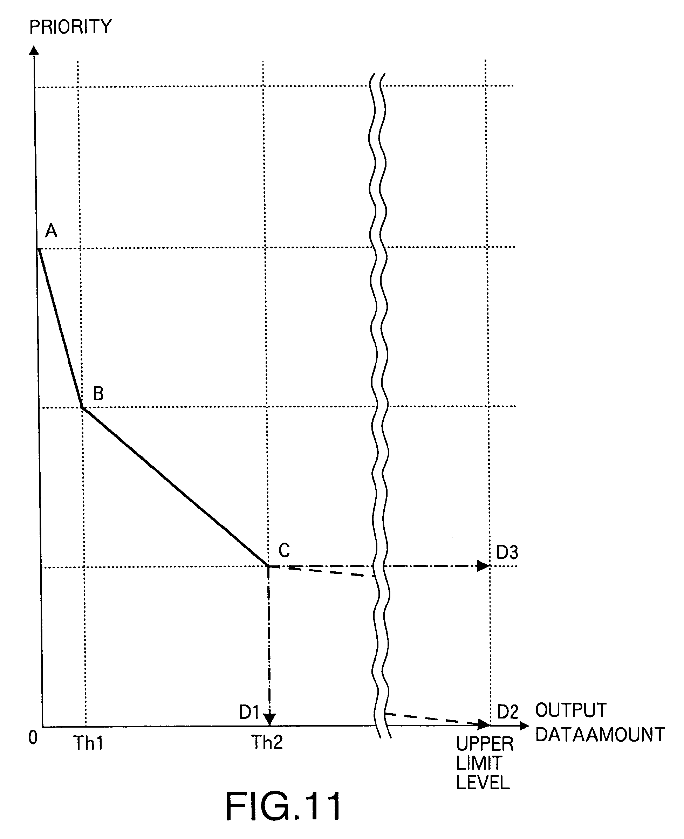

When the data amount detected by read data amount detector 19442 represented by the horizontal axis of the graph of FIG.11 shows that the data amount memorized in threshold level memory 19446 reaches the threshold level (Th1) set for queue 1931 that has outputted, priority calculator 19445 calculates lower priorities with reference to the output data amount, so as to set the priority of above queue 1931 at a predetermined order (i.e. B in FIG.11). In the illustrated example, when the amount of data outputted from queue 1931 is 0, the priority is set at the level shown as A.

Each threshold level memory 19446 shown in FIG.8 has first individual threshold level circuit 19446a and second individual threshold level circuit 19446b. First individual threshold level circuit 19446a memorizes a threshold level corresponding to the minimum guaranteed bandwidth for queue 1931. Second individual level circuit 19446b, provided on per queue 1931 basis, memorizes a higher threshold level than the threshold level memorized in first individual threshold level circuit 19446a. When read data amount detector 19442 detects a data amount that reaches the threshold level (i.e. Th1 in FIG.11) memorized in first individual threshold level circuit 19446a, priority corrector 19443 lowers the priority to the first priority (i.e. B in FIG.11) set for queue 1931 that has outputted data in excess of the minimum guaranteed bandwidth, and writes the result in priority memory 1946. Also, when read data amount detector 19442 detects a data amount that reaches the threshold level memorized in second individual threshold level circuit 19446b (i.e. Th2 in FIG.11), priority corrector 19443 lowers the priority to the second priority (i.e. C in FIG.11), which is lower than the first priority, and writes the result in priority memory 1946.

Given the setting of determining indication 111 pertaining to packet transport circuit 109, priority corrector 19443, when stopping output from queue 1931 having reached the threshold level memorized in second individual threshold level circuit 19446b, lowers the priority to a priority for stopping output, shown as D1 in FIG.11. To allow packet output in excess of the threshold level memorized in second individual threshold level circuit 19446b, priority corrector 19443 may change the priority as with D3 in FIG.11. However, it is more preferable to lower the priority according to the output data amount, as with D2 in FIG.11, so that queues 1931 can output the packets on a fair basis.

Moreover, threshold level memory 19446 memorizes the threshold levels in a way that makes them changeable, and packet transport circuit 109 further has threshold level writer 110 that writes threshold levels in threshold level memory 19446.

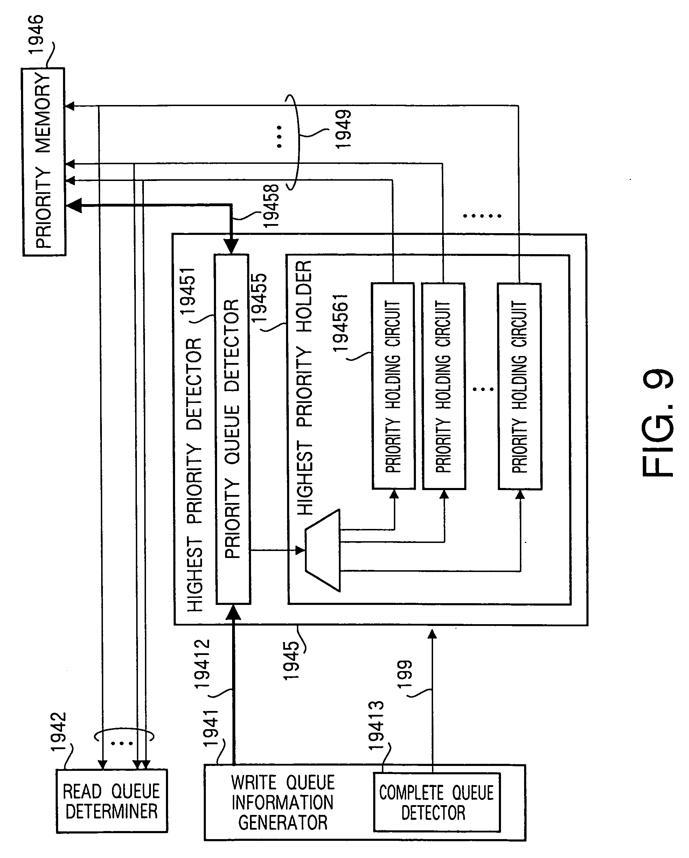

As shown in FIG.9, with reference to write queue information 19412 and the priorities memorized in priority memory 1946, aforementioned highest priority detector 1945 detects the highest priority among the priorities of queues 1931 having packets written therein, on a per container 193 basis, and reports the result to read queue determiner 1942.

With reference to the priorities memorized in priority memory 1946 and write queue information 19412, priority queue detector 19451 detects the highest priority among the priorities of queues 1931 having packets written therein, on a per container 193 basis. Highest priority holder 19455 is capable of holding the priorities detected by priority queue detector 19451.

Highest priority holder 19455 has priority holding circuit 194561 for holding the priorities detected by priority queue detector 19451 on a per container 193 basis, thereby enabling read queue determiner 1942 to determine queue 1931 to read, on a per container 193 basis. Moreover, according to the detection of aforementioned finished queue detector 19413, highest priority detector 1945 detects the highest priority anew among the priorities for queues 1931 having packets written therein, and reports new priorities to read queue determiner 1942.

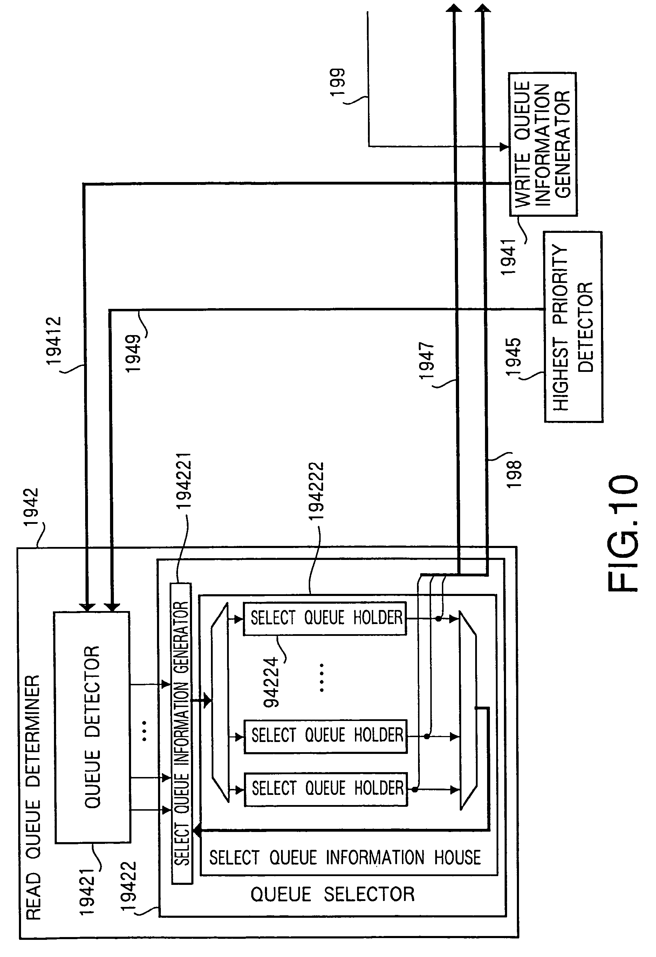

As shown in FIG.10, with reference to the report from highest priority detector 1945 and read queue information 19412, aforementioned read queue determiner 1942 determines queue 1931 to read packets from on a per container 193 basis.

Based on highest priority information 1949 reported from highest priority detector 1945 on a per container 193 basis in accordance with the priority determined by priority determiner 1940, queue detector 19421 detects queue 1931 of the highest priority among queues 1931 represented by read queue information 19412 on a per container 193 basis.

In accordance with the detection of finished queue detector 19413, highest priority detector 1945 detects the highest priority among the priorities of queues 1931 having packets written therein, and reports new priorities to read queue determiner 1942, so that when packet output is finished, read queue determiner 1942 determines new queue 1931 to read packets from.

Moreover, queue selector 19422 selects queue 1931 from among queues 1931 detected by queue detector 19421 on a per container 193 basis, and outputs read queue indicating information 198 and determined queue information 1947 in accordance with this selection, so as to make queue 1931 output the packets.

Queue selector 19422 has select queue information generator 194221 and select queue container 194222. Select queue information generator 194221 generates select queue information that indicates one of queues 1931 detected by queue detector 19421 on a per container 193 basis. Select queue container 194222 contains the select queue information generated by select queue information generator 194221, on a per container 193 basis. In order not to bias the selection of queue 1931 to read in favor of any specific queue 1931, when queue detector 19421 detects queue 1931 apart from queue 1931 indicated by the select queue information currently contained in select queue container 194222,select queue information generator 194221 next generates select queue information indicating this queue 1931.

Moreover, on a per container 193 basis, select queue information container 194222 has select queue holder 194224 for holding select queue information generated by select queue information generator 194221 on a per container 193 basis.

When queue detector 19421 detects queue 1931 apart from queue 1931 indicated by the select queue information currently held in select queue holder 194224, select queue information generator 194221 next generates select queue information indicating this queue 1931, and has it held in select queue holder 194224. Select queue information generator 194221 reports the select queue information held in select queue holder 194224 as determined queue information 1947, on a per container 193 basis.

Queues 1931 are ranked so that select queue information generator 194221 generates select queue information on a per container 193 basis. Select queue information generator 194221 puts queue 1931 indicated by the select queue information currently held in select queue holder 194222 at the end of the rank, and generates select queue information indicating queue 1931 corresponding to the highest rank among queues 1931 detected by queue detector 19421, on a per container 193 basis.

Moreover, with reference to determining indication from determination indicator 111, if no queue 1931 is ranked higher than the second priority, read queue determiner 1942 determines queue 1931 that memorizes packets among queues 1931 indicated by determination indicator 111 as queue 1931 to read.

Thus, according to the first embodiment of the present invention, inputter 191 sorts received packets for containers 193, read queue information generator 1941 in read controller 194 generates read queue information that represents queues 1931 having packets written therein, on a per container 193 basis, and, in a similar manner, priority determiner 1940 in read controller 194 determines the priorities in reading the packets. Thus, according to the first embodiment of the present invention, with reference to read queue information and priority, read queue determiner 1942 determines queue 1931 to read packets from, on a per container 193 basis. Consequently, according to the first embodiment, an increase in the number of transmitters/receivers simply results in an increase in the number of containers 193, so that the time required to determine queues 1931 to read does not change, and thus a high-speed packet transport circuit with short delay time can be achieved.

Moreover, according to the first embodiment of the present invention, select queue information generator 194221 generates select queue information that indicates one of queues 1931 detected by queue detector 19421, and select queue information generator 194221 contains the select queue information generated by select queue information generator 194221 until the next opportunity of selection comes. As a result, when the next opportunity of selection comes and queues 1931 detected by queue detector 19421 include different queue 1931 than the previous select queue information contained in select queue information container 194222, select queue information generator 194221 is able to generate select queue information that indicates this queue 1931, so as to make selection of queue 1931 fair without bias in favor of any specific queue 1931.

Consequently, according to the first embodiment of the present invention, the priorities of a plurality of queues 1931 are determined on a per container 193 basis, and multiple containers 193 transport packets respectively in parallel. Then, it is possible to determine connections between the transmitters and receivers on a fair basis and transmit the packets in parallel. As a result, regardless of the number of the receivers and transmitters, a high-speed packet transport circuit with short delay time can be provided.

### (Second Embodiment)

Next, a second embodiment of the present invention will be described in detail with reference to the accompanying drawings.

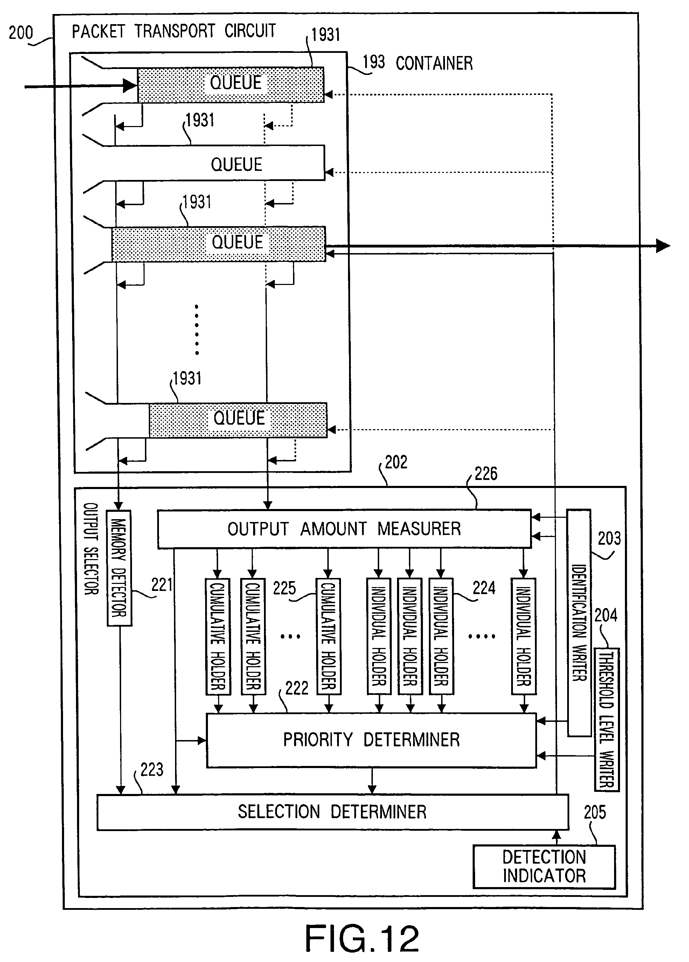

FIG.12 is a block diagram showing the configuration of the packet transport circuit of the second embodiment of the present invention.

Referring to FIG.12, packet transport circuit 200 of the second embodiment of the present invention is based on packet transport circuit 109 of the first embodiment of the present invention, except that output from a plurality of queues 1931 in a plurality of containers 193 is controlled by means of output selector 202 instead of by read controller 194.

Output selector 202 is designed to select one of multiple queues 1931 and output the packets memorized in this selected queue 1931.

Moreover, output selector 202 has memory detector 221, priority determiner 222, selection determiner 223, a plurality of individual holders 224, a plurality of cumulative holders 225, and output amount measurer 226. Memory detector 221 is provided with the function of detecting queues 1931 having packets memorized. Priority determiner 222 is provided with the function of determining the priority to output the packets on a per queue 1931 basis. Then, from among queues 1931 detected by memory detector 221, selection determiner 223 determines queues 1931 to output packets in accordance with the priority determined by priority determiner 222, and provides these queues 1931 with packet output instructions.

In addition, output amount measurer 226 measures the amount of packet data outputted from each queue 1931. Multiple individual holders 224 are provided to correspond respectively to queues 1931. Multiple individual holders 224 holds the amount of output data of the packets outputted from corresponding queues 1931 (i.e. the amount of output data measured by output amount measurer 226). Then, when the amount of output data from queue 1931 held in individual holder 224 reaches the predetermined threshold level set for queue 1931, priority determiner 222 lowers the priority of queue 1931 corresponding to individual holder 224 to a predetermined order, or to an order corresponding to the output data amount. By this means, the relative order of queue 1931, with which the output data amount has not reached the threshold level, is heightened, and the packets memorized in this queue 1931 below the threshold level are outputted preferentially, thereby enabling bandwidth control on a per 1931 basis.

Each of a plurality of cumulative holders 225 is provided to correspond to one or multiple queues 1931 (i.e. group container with one or multiple queues 1931). Multiple cumulative holders 225 accumulate and hold the output data amount of the packets outputted from the corresponding group containers (i.e. the output data amount measured by output amount measurer 226). Then, when the cumulative level of the amount of output data from a group container corresponding to cumulative holder 225 reaches the predetermined threshold level, which is set on a per group container basis (that is, on a per cumulative holder 225 basis), priority determiner 222 lowers the priority of the group container corresponding to this cumulative holder 225 to a predetermined order, or to an order corresponding to the cumulative level of the output data amount.

By this means, the relative order of queue 1931 belonging to a group container with which the cumulative level of output data amount has not reached the threshold level, is heightened, and the packets memorized in queue 1931 belonging to this group container below the threshold level are outputted preferentially, thereby enabling bandwidth control on a per group container basis and enabling bandwidth control on a per queue 1931 basis. Incidentally, the cumulative level of the output data amount held in predetermined cumulative holder 225 refers to the total level of the output data amount of the group container corresponding to predetermined cumulative holder 225. When only one queue 1931 is provided corresponding to predetermined cumulative holder 225, individual holder 224 and cumulative holder 225 corresponding to this queue 1931 hold the same level.

As described above, by dividing a plurality of queues 1931 into groups and making group containers, when, for instance, bandwidth control is executed with respect to a single user apparatus that communicates with a plurality of user apparatuses, the multiple user apparatuses communicating with the user apparatus are each provided with one or multiple queues 1931, thereby managing one or multiple queues 1931 as one group container and executing bandwidth control.

Moreover, output selector 202 has identification writer 203, threshold level writer 204, and detection indicator 205. Identification writer 203 provides queues 1931 and the groups without inconsistency. Identification writer 203 supplies cumulative identification memory 2261 (described later) of output amount measurer 226 and queue identification memory 22261 (described later) of priority determiner 222, with queue identification information representing corresponding queues 1931 on a per cumulative holder 225 basis, and cumulative identification information representing corresponding cumulative holder 225 on a per queue 1931 basis, and have these memorized.

As with queue 1931 that uses up the assignedbandwidth, detection indicator 205 selects between disallowing output from this queue 1931 and making this queue 1931 the best effort type (i.e. queue 1931 with no service guarantee). As with queue 1931 of the lowest priority, detection indicator 205 instructs priority queue detector 2231 of selection determiner 223 (described later) to disallow packet output from this queue 1931. Threshold level writer 204 writes the threshold level set on a per cumulative holder 225 basis and the threshold level per queue 1931 into cumulative threshold level memory 2227 (described later) and individual threshold level memory 2222 (described later) of priority determiner 222.

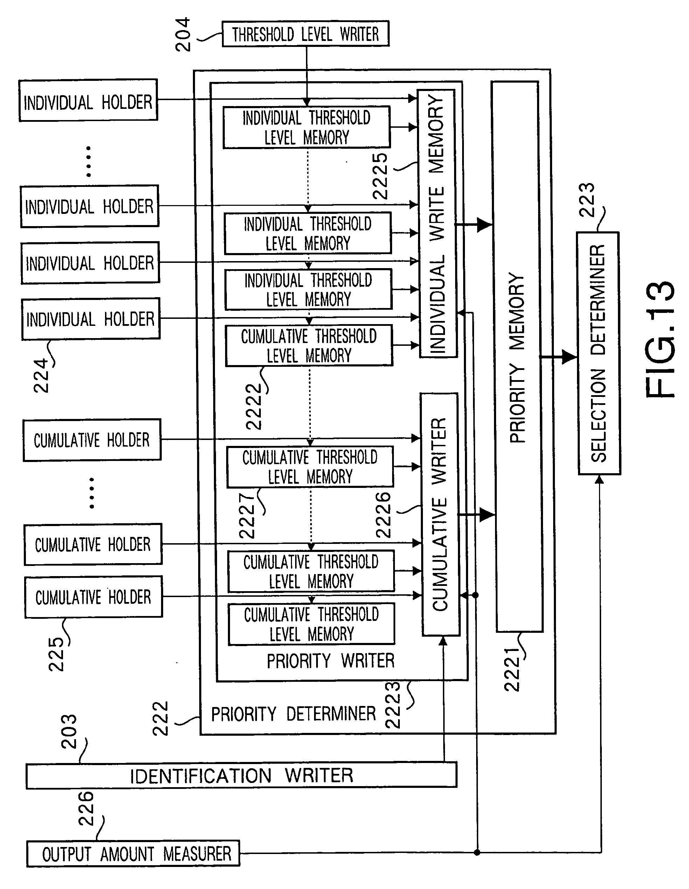

FIG.13 is a block diagram showing the configuration of a priority determiner of the packet transport circuit of the second embodiment of the present invention. As shown in FIG.13, priority determiner 222 has priority memory 2221 and priority writer 2223. Then, priority writer 2223 writes the priority of each queue 1931 and group container into priority memory 2221.

In addition, priority writer 2223 has a plurality of individual threshold level memories 2222, individual writer 2225, cumulative writer 2226, and a plurality of cumulative threshold level memories 2227.

Multiple individual threshold level memories 2222 are provided to respectively correspond to individual holders 224. Multiple individual holders 224 have the threshold level for the output data amount of each individual holder 224 memorized (i.e. the amount of output data measured by output amount measurer 226). Incidentally, it is possible to provide each individual threshold level memory 2222 with a unique threshold level (that is, a unique threshold level for each individual holder 224) . It is also possible to change the threshold level memorized in each individual threshold level memory 2222 by means of threshold level writer 204.

Upon receiving the output data amount held in each individual holder 224 and the threshold level memorized in each individual threshold level memory 2222, individual writer 2225 compares the output data amount supplied from individual holder 224 with the threshold level supplied from individual threshold level memory 2222 corresponding to above individual holder 224. When the output data amount exceeds the threshold level, individual writer 2225 lowers the priority of this queue 1931 to a predetermined order and writes this predetermined order in priority memory 2221.

Meanwhile, a plurality of cumulative threshold level memories 2227 are provided to respectively correspondtocumulativeholders225.Multiplecumulative threshold level memories 2227 have the cumulative levels of the output data amount of cumulative holders 225 memorized (that is, the cumulative level of the output data amount per group container). Incidentally, it is possible to provide each cumulative threshold level memory 2227 with a unique threshold level (that is, a unique threshold level per cumulative holder 224). Moreover, it is also possible to change the threshold level memorized in each cumulative threshold level memory 2227 by means of threshold level writer 204.

Upon receiving the cumulative level of the output data amount held in each cumulative holder 225 and the threshold level memorized in each cumulative threshold level memory 2227, cumulative writer 2226 compares the cumulative level of the output data amount supplied from cumulative holder 225 and the threshold level supplied from cumulative threshold level memory corresponding to this cumulative holder 225. When the cumulative level of the output data amount exceeds the threshold level, cumulative writer 2226 lowers the priority of this queue 1931 and the group container to a predetermined order, and writes this predetermined order in priority memory 2221.

Incidentally, it is preferable to have individual holder 224 and cumulative holder 225 reset periodically, and hold the output data amount and the cumulative level per period. Likewise, it is also preferable to reset the priority of each queue 1931 or group container memorized in priority memory 2221 periodically, so as to resume the priority provided in advance on a per queue 1931 or group container basis. As for the threshold level, it is preferably provided for each queue 1931 or group container, memorized in individual threshold level memory 2222 or in cumulative threshold level memory 2227, and determined with reference to each assigned bandwidth and the above period.

Moreover, in particular, the use of threshold level writer 204 enables writing and change of threshold levels in individual threshold level memory 2222 and cumulative threshold level memory 2227 corresponding to queues 1931 and the group containers. As a result, it is possible to accurately assign bandwidth assigned each group container and assign bandwidth to each queue belonging to a predetermined group container.
It is also possible to flexibly change the bandwidth to assign to each queue 1931 and group container at timings of choice.

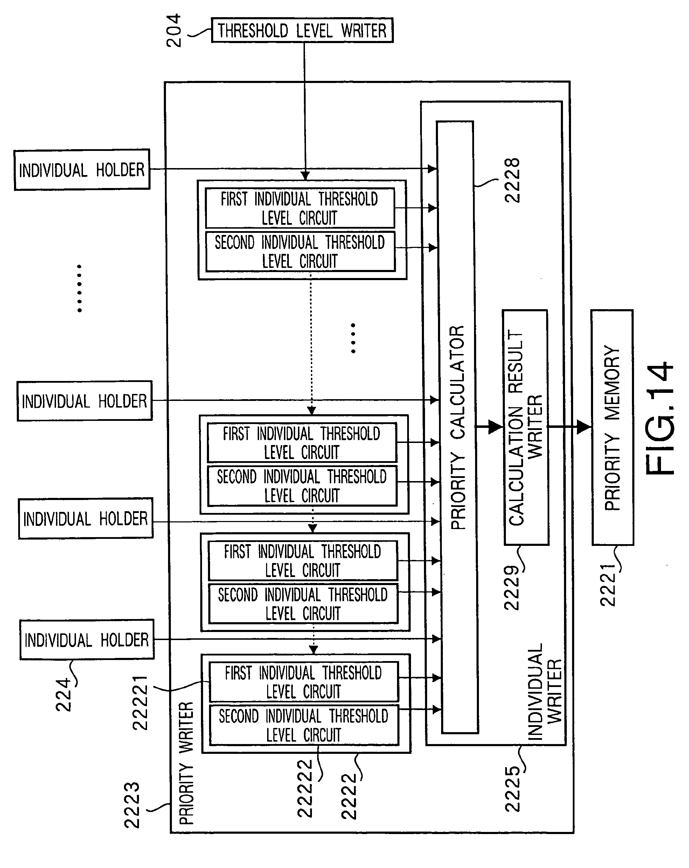

FIG.14 is a block diagram showing the configurations of an individual threshold level memory and an individual writer in the packet transport circuit of the second embodiment of the present invention. As shown in FIG.14, individual threshold level memory 2222 has first individual threshold level circuit 22221 and second individual threshold level circuit 22222. Individual writer 2225 has priority calculator 2228 and calculation result writer 2229.

When the amount of output data from individual holder 224 exceeds the threshold level memorized in corresponding individual threshold level memory 2222, priority calculator 2228 of individual writer 2225 shown in FIG.14 calculates the priorities, so as to set the priority of corresponding queue 1931 at a predetermined priority. This calculation result is written into priority memory 2221 by calculation result writer 2229.

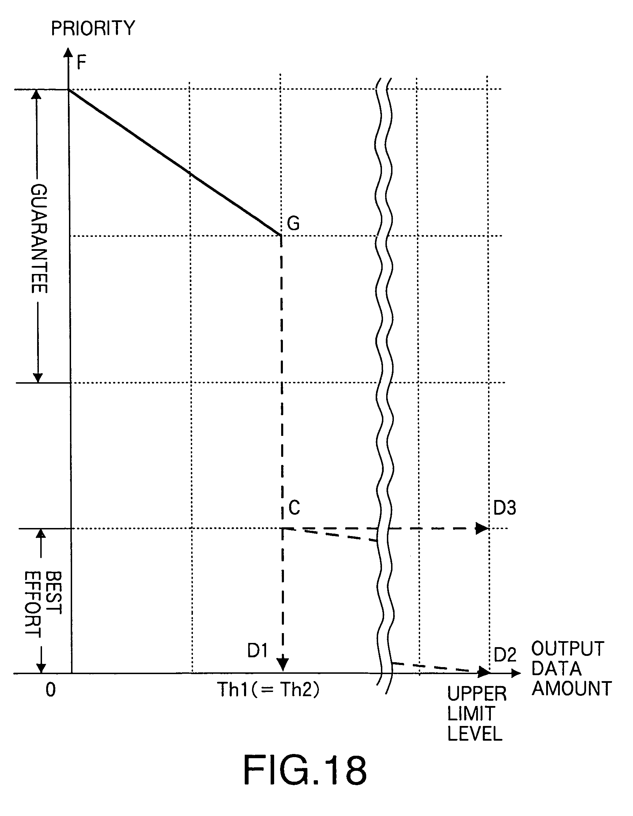

FIG.18 is a figure for explaining the first example of relationship between priority calculated by the priority calculator and the output data amount in the packet transport circuit of the second embodiment of the present invention. In FIG.18, the vertical axis represents priority and the horizontal axis represents the output data amount of queue 1931. Priority calculator 2228 determines the priority in accordance with the output data amount and the threshold level memorized in individual threshold memory 2222. As shown in FIG.18, when queue 1931 outputs no packet, the priority of queue 1931 is considered priority F shown in FIG.18. The priority of queue 1931 is lowered as the amount of output data from queue 1931 increases, and, when the output data amount reaches the threshold level provided on a per queue 1931 basis (i.e. Th1 in FIG.18), the priority of queue 1931 is set at a predetermined order (i.e. priority G in FIG.18).

By thus determining the priority by means of priority calculator 2228, it is possible to set a higher priority for queue 1931 that has not outputted data in a close amount to the threshold level than the priority of queue 1931 that has outputted data in a close amount to the threshold level. As a result, the average time it takes the output data amount to reach the threshold level becomes equal between queues 1931.

As shown in FIG.14, individual threshold level memory 2222 has first individual threshold level circuit 22221 and second individual threshold level circuit 22222. First individual threshold level circuit has a threshold level corresponding to the minimum guaranteed bandwidth (i.e. minimum guaranteed bandwidth threshold level) for queue 1931 memorized. Second individual threshold level circuit 22222 has a threshold level for the maximum bandwidth memorized (i.e. maximum bandwidth threshold level), which is greater than the minimum guaranteed bandwidth threshold level memorized in first individual threshold level circuit 22221. In case all queues 1931 having packets memorized (i.e. queuing) have outputted data up to the minimum guaranteed bandwidth threshold level memorized in first individual threshold level circuit 22221, extra bandwidth is provided for effective use so that these queues 1931 can output data up to the threshold level memorized in second individual level circuit 22222.

When the output data amount held in individual holder 224 reaches the threshold level memorized in first individual threshold level circuit 22221, individual writer 2225 lowers the priority of this queue 1931 to the first priority set for queue 1931 that has outputted data in a greater amount than the minimum guaranteed bandwidth threshold level, and writes the result in priority memory 2221. When the output data amount held in individual holder 224 reaches the threshold level memorized in second individual threshold level circuit 22222, individual writer 2225 lowers the priority of this queue 1931 to the second priority, which is lower than the first priority, and writes the result in priority memory 2221.

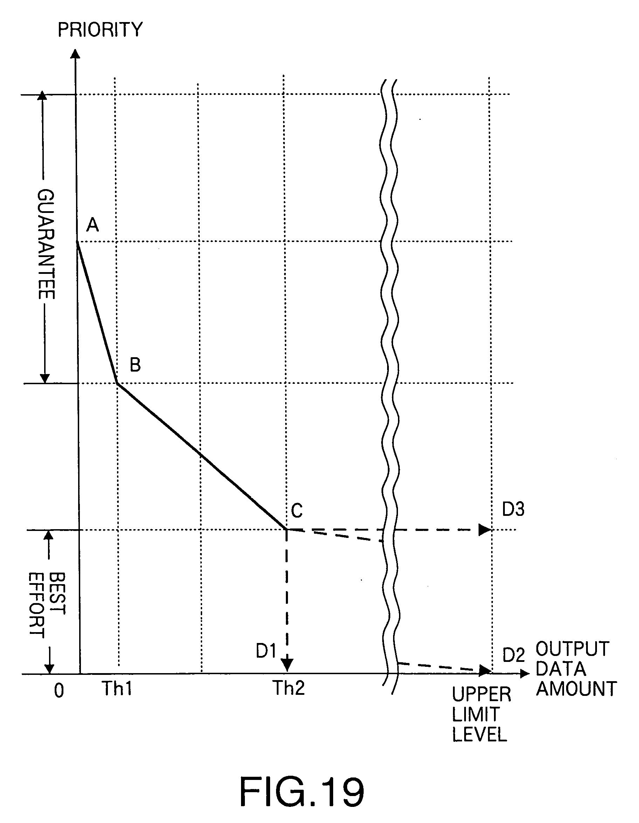

FIG.19 is a figure for explaining a second example of relationship between priority calculated by the priority calculator and the output data amount, in the packet transport circuit of the second embodiment of the present invention. In FIG.19, the vertical axis represents priority and the horizontal axis represents the output data amount of queue 1931.

As shown in FIG. 19, when queue 1931 outputs no packet, priority calculator 2228 sets the priority of queue 1931 at priority A in FIG.19, and lowers the priority of queue 1931 as the amount of output data from queue 1931 increases. When the output data amount reaches the threshold level memorized in first individual threshold level circuit 22221 (i.e. Th1 in FIG.19), the priority of queue 1931 is set at a predetermined priority (i.e. priority B in FIG.19).

By this means, even when all queues 1931 having packets queued have outputted data up to the minimum guaranteed bandwidth threshold level, queues 1931 are still able to output packets until the amount of output data reaches the threshold level memorized in second individual threshold level circuit 22222 (i.e. Th2 in FIG.19). When the amount of output data from queue 1931 reaches threshold level Th2, the priority of this queue 1931 becomes best effort priority C shown in FIG.19.

By this means, threshold level writer 204 is able to have a lower threshold level, than the threshold level memorized in first individual threshold level circuit 22221, written and memorized in second individual threshold level circuit 22222 in individual threshold level memory 2222. As a result, it is possible to set the minimum guaranteed bandwidth and the maximum guaranteed bandwidth for queue 1931.

Moreover, as for queue 1931 that is made the best effort type by detection indicator 205, subsequently, regardless of the amount of output data of the packets from this queue 1931, it is also possible not to change the priority as represented by priority D3 in FIG.19. Furthermore, as represented by priority D2 in FIG.19, it is also possible to continue outputting packets incessantly over the monitoring period, and, as for queue 1931 that has outputted data in an amount corresponding to the physically outputtable upper limit level, disallow packet output from this queue 1931 by means of detection indicator 205. By this means, queues 1931 that have outputted data in a greater amount have lower priority, thereby enabling fair packet output between queues 1931.

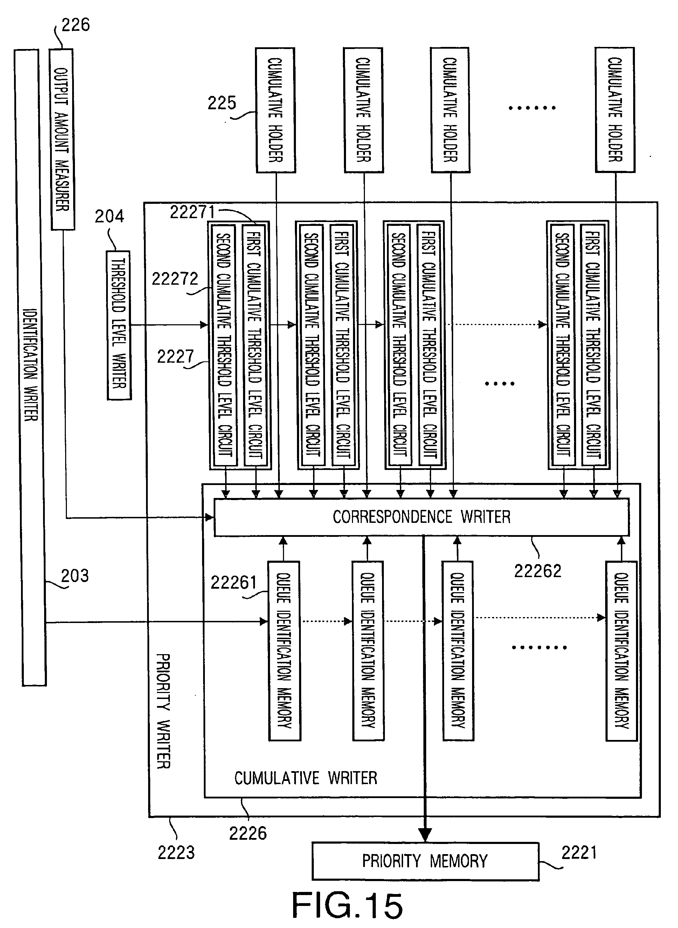

FIG.15 is a block diagram showing the configuration of a cumulative threshold level memory and a cumulative writer in the packet transport circuit of the second embodiment of the present invention. As shown in FIG.15, cumulative threshold level memory 2227 has first cumulative threshold level circuit 22271 and second cumulative threshold level circuit 22272. Cumulative writer 22262 has queue identification memory 22261 and correspondence writer 22262.

A plurality of queue identification memories 22261 in cumulative writer 2226 shown in FIG.15 are provided to respectively correspond to cumulative holders 225. A plurality of queue identification memories 22261 have identification information representing corresponding queues 1931 and group containers memorized. When the output data amount held in cumulative holder 225 exceeds the predetermined threshold level, correspondence writer 22262 makes reference to the identification information memorized in queue identification memories 22261 corresponding to cumulative holders 225, detects queue 1931 with which the priority needs to be changed, and writes the changed priority in priority memory 2221.

First cumulative threshold level circuit 22271 of cumulative threshold level memory 2227 has a minimum guaranteed bandwidth cumulative threshold level memorized, which is a cumulative threshold level for the minimum guaranteed bandwidth for queue 1931 corresponding to cumulative holder 225 (when there are a plurality of corresponding queues 1931, the total of their threshold levels is used). Second cumulative threshold level circuit 22272 has a cumulative threshold level for the maximum bandwidth (i.e. maximum bandwidth cumulative threshold level), which is greater than the minimum guaranteed bandwidth cumulative threshold level memorized in first cumulative threshold level circuit 22271.

When the output data amount held in cumulative holder 225 reaches the threshold level memorized in first cumulative threshold level circuit 22271, cumulative writer 2226 lowers the priority of this queue 1931 to the first priority for queue 1931 that has outputted data in excess of the minimum guaranteed bandwidth threshold level, and writes the result in priority memory 2221. When the output data amount held in cumulative holder 225 reaches the threshold level memorized in second cumulative threshold level circuit 22272, cumulative writer 2226 lowers the priority of this queue 1931 to a second priority lower than the first priority, and writes the result in priority memory 2221.

By this means, in case all queues 1931 that have packets queued and all group containers have outputted data up to the minimum guaranteed bandwidth cumulative threshold level, these queues 1931 can output data up to the maximum bandwidth threshold level, thereby making effective use of extra bandwidth.

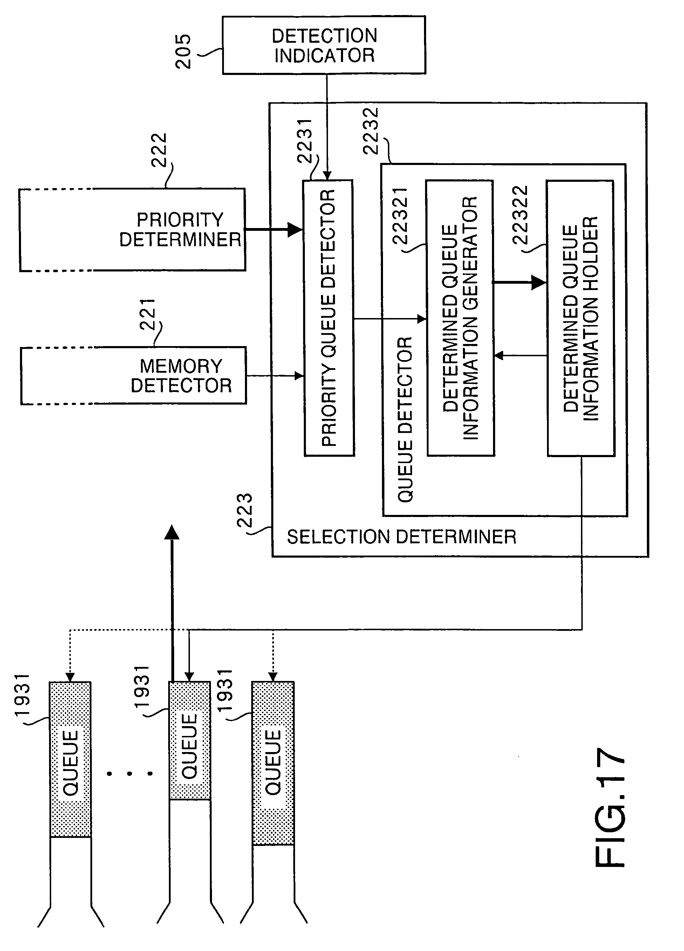

FIG.17 is a block diagram showing the configuration of a selection determiner of the packet transport circuit of the second embodiment of the present invention. As shown in FIG.17, selection determiner 223 has priority queue detector 2231 and queue determiner 2232. With reference to the priority determined by priority determiner 222, priority queue detector 2231 detects queue 1931 corresponding to the highest priority detected by memory detector 221. Queue determiner 2232 is capable of determining queues 1931 to be selected, from among queues 1931 detected by priority queue detector 2231.

Moreover, queue determiner 2232 includes determined queue information generator 22321 and determined queue information holder 22322. Determined queue information generator 2321 generates determined queue information representing one of queues 1931 detected by priority queue detector 2231. Determined queue information holder 22322 holds the determined queue information from determined queue information generator 22321. By this means, determined queue information generator 22321 is capable of detecting queue 1931 represented by the determined queue information currently held in determined queue information holder 22322.

When determined queue information holder 22322 detects queue 1931 apart from queue 1931 currently held by determined queue information holder 22322, determined queue information generator 22321 next generates determined queue information representing this queue 1931. Moreover, determined queue information generator 22321 puts queue 1931 represented by the determined queue information currently held in determined queue information holder 22322 at the end of the rank (corresponding to the lowest priority), and next generates determined queue information representing queue 1931 corresponding to the highest rank (i.e., queue 1931 of the highest priority) among queues 1931 detected by priority queue detector 2231, so that the rank changes upon every selection and multiple queues 1931 are selected on a fair basis.

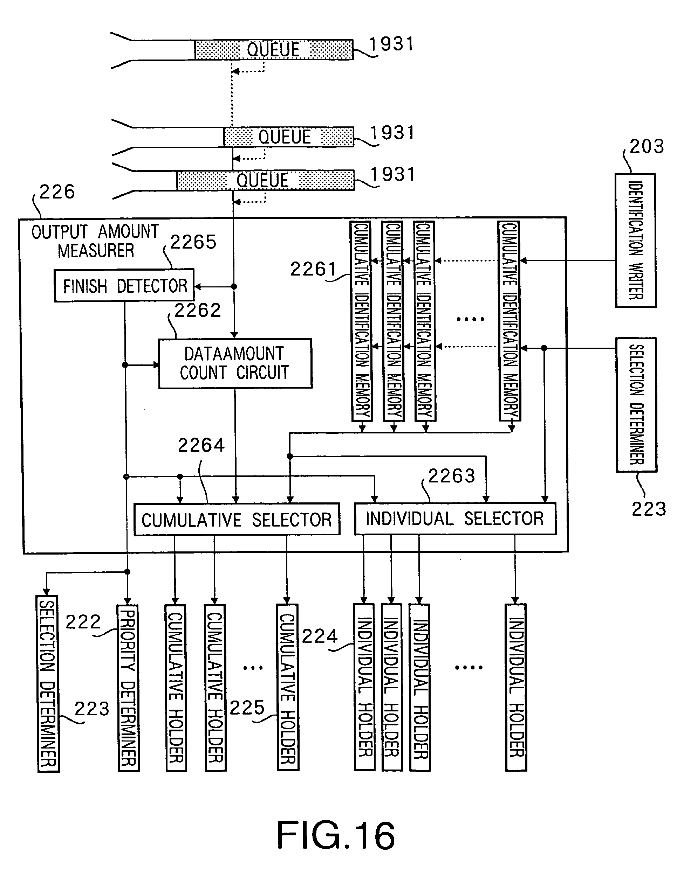

FIG.16 is a block diagram showing the configuration of an output amount measurer of the packet transport circuit of the second embodiment of the present invention. As shown in FIG.16, output amount measurer 226 has cumulative identification memory 2261, data amount count circuit 2262, individual selection circuit 2263, cumulative selection circuit 2264, and finish detector 2265. A plurality of cumulative identification memories 2261 are set corresponding to cumulative holders 225. A plurality of cumulative identification memories 2261 are capable of memorizing cumulative identification information representing the correspondence between cumulative holders 225 and queues 1931 and the group containers. By this means, the correspondence between cumulative holders 225 and queues 1931 and the group containers becomes identifiable, so that the output data amount of queue 1931 that outputs packets accumulates in cumulative holder 225 indicated by the cumulative identification information.

In addition, data amount counter 2262 counts the amount of output data from queue 1931. The output data amount counted by data amount count circuit 2262 is provided to individual selection circuit 2263 and to cumulative selection circuit 2264. Individual selection circuit 2263 selects individual holder 224 that is capable of holding the output data amount of each queue 1931. Cumulative selection circuit 2264 selects cumulative holder 225 capable of accumulating and holding the output data amount of each queue 1931 and group container.

Individual selection circuit 2263 supplies the output data amount to individual holder 224 corresponding to queue 1931 selected by selection determiner 223. Moreover, cumulative selection circuit 2264 supplies the output data amount to cumulative holder 225 represented by the cumulative identification information in cumulative identification memory 2261 corresponding to the group container selected by selection determiner 223. Moreover, identification writer 203 writes queue identification information in queue identification memory 22261 provided on a per cumulative holder basis, has it memorized, and has cumulative identification information representing this cumulative holder 225 in cumulative identification memory 2261 corresponding to queue 1931 represented by the queue identification information. As a result, it is possible to set the correspondence between queues 1931 and the group containers without inconsistency.

Moreover, identification writer 203 makes the information memorized in queue identification memory 22261 and cumulative identification memory 2261 changeable, thereby enabling the user to change the correspondence between queues 1931 and the group containers.

Finish detector 2265 detects the end of packet output from queues 1931. Finish detector 2265 is capable of reporting the end of packet output to priority determiner 222, selection determiner 223, data amount count circuit 2262, individual selection circuit 2263, and cumulative selection circuit 2264, and so forth, thereby reporting processing timing (to secure synchronization) and reducing the power consumed during the non-processing period (i.e. wait-period). That is, based on the timing of the end of packet output, data amount count circuit 2262 is capable of counting and providing the output data amount to individual holder 224 and to cumulative holder 225. Priority determiner 222 is likewise capable of determining the priority of queue 1931 that has outputted packets, in accordance with the timing of the end of packet output. In addition, selection determiner 222 is likewise capable of determining queue 1931 to select anew in accordance with the timing of the end of packet output. As described above, by thus detecting the end of packet output by means of finish detector 2265, when there is queue 1931 still outputting packets, selection determiner 223 is unable to select another queue 1931 until the current packet output from queue 1931 is over. As a result, not only fixed-length packets such as ATM cells, but also variable-length packets such as IP packets can be controlled and outputted accurately.

Furthermore, the above-noted priority resumes the priority of the initial setting after a certain monitoring period (i.e. on a periodic basis). As shown in FIG.18, threshold level writer 204 has the same threshold level (i.e. Th1 = Th2 in FIG.18) written and memorized in first individual threshold level circuit 22221 and second individual threshold level circuit 22222 of individual threshold level memory 2222, while individual writer 2225 writes the priority of queue 1931 that has not outputted packets with the highest priority (i.e. priority F in FIG.18) in priority memory 2221. As a result, without special installation, it is possible to provide queue 1931 with little delay, like dedicated-channel services, in packet transport circuit 200.

As shown in FIG.18, queue 1931 that has outputted packets corresponding to an output data amount that reaches threshold level Th1 has its priority lowered to priority G in FIG.18. Moreover, when detection indicator 205 disallows output from this queue 1931, the priority is lowered to priority D1 in FIG.18, and then no packet will be outputted from this queue 1931. When detection indicator 205 makes queue 1931 the best effort type, this queue 1931 has its priority lowered to the best effort priority shown as priority C in FIG.18. Subsequently, when this queue 1931 outputs the packets, it is possible not to change the priority, as represented by priority D3 in FIG.18. On the other hand, as represented, bypriority D2 in FIG.18, it is preferable to disallow output from queue 1931 that has reached the upper limit level.

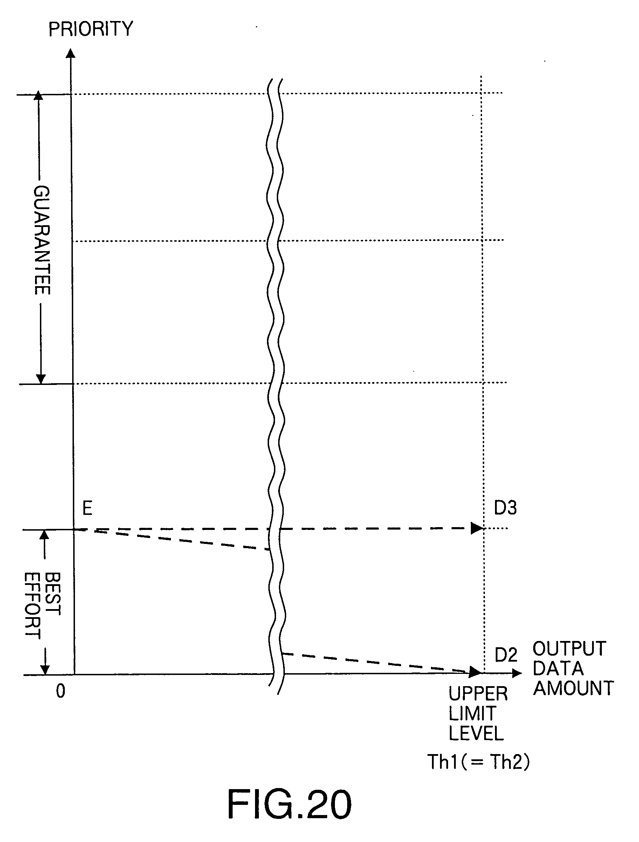

Also, FIG.20 is a figure for explaining a third example of relationship between priority calculated by the priority calculator and output data amount, in the packet transport circuit of the second embodiment of the present invention. As shown in FIG.20, first individual threshold level circuit 22221 and second individual threshold level circuit 22222 of individual threshold level memory 222 have the same threshold level (i.e. Th1 = Th2 in FIG.20) written and memorized. Regardless of the output data amount of queue 1931, individual writer 2225 writes lowest priority E in priority memory 2221. As a result, best effort queue 1931 can be provided inside packet transport circuit 200. In this case, as described above, when this queue 1931 later outputs packets, it is possible not to change the priority, as represented by priority D3 in FIG.18. However, as represented by priority D2 in FIG.18, it is preferable to disallow output from queue 1931 that has reached the upper limit level.

Although a case has been described with the second embodiment of the present invention where packet transport circuit 200 is formed with individual units having respective functions, it is equally possible to implement the present invention by way of executing a program that enables equivalent operations by means of a computer.

Thus, in addition to the advantage of the first embodiment of the present invention, according to the second embodiment of the present invention, a plurality of queues 1931 are divided into groups and make a plurality of group containers, and bandwidth control is executed with reference to the cumulative level (i.e. total level) of the output data amount of queues 1931 belonging to the multiple group containers. As a result, with simple configurations, it is possible to select queue 1931 to output packets without reading information from two types of tables sequentially.

Furthermore, the second embodiment of the present invention is applicable to cases where one container 193 controls output from a plurality of queues 1931.

This application is based on Japanese Patent Application No.2002-157333, filed on May 30, 2002, and Japanese Patent Application No.2002-160579, filed on May 31, 2002, entire content of which is expressly incorporated herein by reference.

### Industrial Applicability

The present invention is applicable to an apparatus that receives packets and outputs them through a plurality of output ports.

## Claims

1. A packet transport circuit comprising:
a plurality of containers that respectively connect with corresponding output ports and accommodate packets in a plurality of queues in and from which said packets are written and read;
an inputter that sorts the packets inputted through an input port and has said packets accommodated in said containers; and
a read controller that, on a per container basis, determines a queue to read the packets from, reads said packets from the determined queue, and outputs said packets to said output ports,
wherein said read controller comprises:
a write queue information generator that, on a per container basis, generates write queue information indicating the queues having the packets written therein;
a priority determiner that, on a per queue basis, determines a priority in the reading of the packets; and
a read queue determiner that, on a per container basis, determines the queue to read the packets from, with reference to the write queue information and the priority.

2. The packet transport circuit of Claim 1, wherein said priority determiner comprises:
a priority memory that, on a per container basis, memorizes priorities of the queues in a distinguishable manner;
a priority writer that, on a per container basis, has said priorities of the queues written and memorized into said priority memory; and
a highest priority detector that, on a per container basis, detects the queue corresponding to a highest priority among the queues having the packets written therein, with reference to the write queue information and the priorities memorized in said priority memory, and sends a report of the detected queue to said read queue determiner,
wherein, with reference to the report from said highest priority detector and the write queue information, said read queue determiner determines the queue to read the packets from, on a per container basis.

3. The packet transport circuit of Claim 2, wherein said read queue determiner comprises:
a queue detector that, on a per container basis, detects the queue corresponding to the highest priority among the queues indicated by the read queue information, with reference to the priorities determined by said priority determiner; and
a queue selector that, on a per container basis, selectively employs the queue detected on a per container basis by said queue detector, as the queue to read the packets from.

4. The packet transport circuit of Claim 3, wherein said queue selector comprises:
a select queue information generator that, on a per container basis, selectively employs the queue detected on a per container basis by said queue detector, as the queue to read the packets from, and generates select queue information indicating the employed queue; and
a select queue container that contains the select queue information generated on a per container basis by said select queue information generator,
wherein, when the queue indicated by the select queue information currently held in said select queue container and the queue selected by said queue detector do not match, said select queue information generator next generates select queue information indicating said queue detected by said queue detector.

5. The packet transport circuit of Claim 4,
wherein said select queue information container comprises, on a per container basis, a select queue holder that holds the select queue information generated on a per container basis by said select queue information generator; and
wherein, when the queue indicated by the select queue information currently held in said select queue holder and the queue detected by said queue detector do not match, said select queue information generator next generates select queue information indicating said queue detected by said queue detector and has said select queue information held in said select queue holder.

6. The packet transport circuit of Claim 5,
wherein the queues are placed in a rank order so as to enable said select queue information generator to generate the select queue information on a per container basis; and
wherein said select queue information generator places the queue indicated by the select queue information currently held in said select queue holder at a lower end of the rank order, and generates select queue information indicating the queue corresponding to the highest rank among the queues detected by said queue detector.

7. The packet transport circuit of Claim 6, wherein said priority writer comprises:
a read data amount detector that, on a per container basis, detects an amount of data read from the queues; and
a priority corrector that, when the amount of data detected by said read data amount detector and a threshold level set on a per queue basis match, corrects and lowers the priority of the queue to a predetermined priority, and writes the corrected priority in said priority memory.

8. The packet transport circuit of Claim 7, wherein said priority corrector comprises:
a threshold level memory that memorizes threshold levels on a per queue basis; and
a priority calculator that, on a per queue basis, calculates the priorities of the queues with reference to the data amount detected by said read data amount detector and the threshold levels of the queues having outputted the packets memorized in said threshold level memory, and writes the calculated priorities in said priority memory.

9. The packet transport circuit of Claim 8, wherein, when the data amount detected by said read data amount detector and the threshold level set for the queues having outputted the data amount memorized in said threshold level memory match, said priority queue calculator calculates the priorities of corresponding queues lower with reference to the output data amount such that said priorities of said corresponding queues become a predetermined priority.

10. The packet transport circuit of Claim 9,
wherein said threshold level memory comprises:
a first individual threshold level circuit that memorizes a threshold level corresponding to a minimum guaranteed bandwidth for the queue; and
a second individual threshold level circuit that memorizes a threshold level greater than the threshold level memorized in said first individual threshold level circuit;
wherein, when the data amount detected by said read data amount detector and the threshold level memorized in said first threshold level circuit match, said priority corrector lowers the priority to a first priority set for the queue having outputted the data amount in excess of the minimum guaranteed bandwidth, and writes the lowered priority in said priority memory; and
wherein, when the data amount detected by said read data amount detector and the threshold level memorized in said second threshold level circuit match, said priority corrector lowers the priority to a second priority, which is lower than the first priority, and writes the lowered priority in said priority memory.

11. The packet transport circuit of Claim 10, wherein said priority detector comprises:
a priority queue detector that, on a per container basis, detects the highest priority among the priorities of the queues having the packets memorized therein, with reference to the priorities memorized in said priority memory and the write queue information; and
a priority holder that holds the priority detected by said priority queue detector.

12. The packet transport circuit of Claim 11, wherein said priority holder holds the priority detected by said priority queue detector, on a per container basis.

13. The packet transport circuit of Claim 12, wherein said write queue information generator comprises:
a write queue information memory that memorizes write queue information on a per container basis; and
a write queue information updater that updates the write queue information memorized in said queue information memory according to a writing condition of the packets in the queues.

14. The packet transport circuit of Claim 13, wherein said write queue information updater comprises a finished queue detector that, on a per container basis, detects the queue that finishes outputting the packets, and updates the write queue information according to the detection by said finished queue detector.

15. The packet transport circuit of Claim 14, wherein said priority determiner determines a new priority of the queue having outputted the packets according to the detection by said finished queue detector.

16. The packet transport circuit of Claim 15, wherein said priority writer has the priorities written and memorized into said priority memory according to the detection by said finished queue detector.

17. The packet transport circuit of Claim 16, wherein said priority detector detects a new highest priority among the priorities of the queues having the packets written therein according to the detection by said finished queue detector, and reports new priorities to said write queue determiner.

18. The packet transport circuit of Claim 17, wherein said queue determiner determines a new queue to read the packets from, with reference to the new priorities reported from said priority detector.

19. The packet transport circuit of Claim 17, further comprising a threshold level writer that writes the threshold levels in said threshold level memory,
wherein said threshold level memory memorizes the threshold levels in a changeable manner and has said threshold levels written thereinto on a per queue basis by said threshold level writer.

20. The packet transport circuit of Claim 19, further comprising a determination indicator that, when the priority is lower than the second priority, determines the queue that can output the packets, and indicates the determined queue to said read queue determiner,
wherein, when no queue is higher than the second priority, said read queue determiner determines, from among the queues indicated by said determination indicator, the queue having the packets memorized therein as the queue to read.

21. A packet transport circuit comprising:
a plurality of containers that respectively connect with corresponding output ports and accommodate packets in a plurality of queues in and from which said packets are written and read;
an inputter that sorts the packets inputted through an input port and has said packets accommodated in said containers; and
a read controller that, on a per container basis, determines a queue to read the packets from, reads said packets from the determined queue, and outputs said packets to said output ports,
wherein said read controller comprises:
a write queue information generator that, on a per container basis, generates write queue information indicating the queues having the packets written therein;
a packet output selector that, on a per queue basis, determines priorities in outputting the packets from the queues; and
a read queue determiner that, on a per container basis, determines the queue to read the packets from, with reference to the write queue information and the priorities;
wherein said packet output selector comprises:
a memory detector that detects the queues having the packets memorized therein;
a priority determiner that, on a per queue basis, determines a priority in outputting the packets;
a selection determiner that, from among the queues detected by said memory detector, determines the queue to output the packets, with reference to the priorities determined by said priority determiner;
an output amount measurer that measures an output data amount of the packets outputted from the queue; and
a plurality of cumulative holders that, with reference to the output data amount measured by said output amount measurer, accumulate and hold respective output data amounts from a plurality of group containers each comprising one or a plurality of queues, and
wherein, when a cumulative level of the output data amounts of the queues held in a cumulative holder exceeds a predetermined threshold level, said priority determiner lowers the priorities of the queues corresponding to said cumulative holder to a predetermined priority.

22. The packet transport circuit of Claim 21,
wherein said priority selector comprises:
a priority memory that memorizes priorities of a plurality of queues respectively; and
a priority writer that writes the priorities of said queues in said priority memory; and
wherein said priority writer comprises:
a cumulative threshold level memory that memorizes predetermined threshold levels set on a per cumulative holder basis; and
a cumulative writer that, when the cumulative level of the output data amounts of the queues held in said cumulative holder exceeds the predetermined threshold level memorized in said cumulative threshold level memory, writes the priorities of the queues, lowered by said priority determiner to the predetermined priority, in said priority memory; and,
wherein said selection determiner selects the queue corresponding to a highest priority among the priorities memorized in said priority memory, as the queue to output the packets.

23. The packet transport circuit of Claim 22, further comprising a plurality of individual holders that each hold the output data amount of a corresponding queue among the output data amounts measured by said output amount measurer with respect to the queues that output the packets,
wherein, when the output data amount of the queue held in the individual holder exceeds the threshold level, said priority determiner lowers the priority of said queue to a predetermined priority.

24. The packet transport circuit of Claim 23, further comprising:
an individual threshold level memory that memorizes a predetermined threshold level set on a per individual holder basis; and
an individual writer that, when the output data amount of the queue held in said individual holder exceeds the predetermined threshold level memorized in said individual threshold level memory, writes the priority of said queue, lowered by said priority determiner to the predetermined priority, in said priority memory.

25. The packet transport circuit of Claim 24, further comprising a priority calculator that, when the output data amount held in said individual holder exceeds the predetermined threshold level memorized in said individual threshold level memory, calculates and lowers the priority of said queue to a predetermined priority,
wherein said priority determiner determines the priorities according to the calculation result of said priority calculator.

26. The packet transport circuit of Claim 25,
wherein a first threshold level corresponding to a minimum guaranteed bandwidth for the queue and a second threshold level greater than the first threshold level are memorized in said individual threshold level memory as the predetermined threshold level; and
wherein, when the output data amount of the queue held in said individual holder exceeds the first threshold level, said priority determiner lowers the priority of said queue to a first predetermined priority; and
wherein, when the output data amount of the queue held in said individual holder exceeds a second threshold level, said priority determiner lowers the priority of said queue to a second predetermined priority lower than the first priority.

27. The packet transport circuit of Claim 26, wherein said selection determiner comprises:
a priority queue detector that detects the queue corresponding to the highest priority among the queues detected by said memory detector; and
a queue determiner that determines the queue to be selected by said selection determiner from among the queues detected by said priority queue detector.

28. The packet transport circuit of Claim 27,
wherein said queue determiner comprises:
a determined queue information generator that generates determined queue information indicating the queue detected by said priority queue detector; and
a determined queue information holder that holds the determined queue information generated by said determined queue information generator; and
wherein, when the queue indicated by the determined queue information currently held in said determined queue information holder and the queue detected by said priority queue detector do not match, said determined queue information generator next generates the determined queue information indicating the detected queue.

29. The packet transport circuit of Claim 28,
wherein the plurality of queues are placed in a rank order according to respective priorities thereof; and
wherein said determined queue information generator generates the determined queue information placing the queue indicated by the determined queue information held in said determined queue information holder at an lower end of the rank order, and generates the determined queue information placing the detected queue at an upper end of said rank order.

30. The packet transport circuit of Claim 29, further comprising a queue identification memory that memorizes queue identification information indicating correspondence between said cumulative holders and queues,
wherein, when the cumulative level of the output data amounts held in a cumulative holder and the threshold level memorized in said cumulative threshold level memory match, said cumulative writer makes reference to the queue identification information and writes the priority of the queue corresponding to said cumulative holder into said priority memory.

31. A packet transport method comprising:
an input step of sorting a plurality of packets and accommodating said plurality of packets in a plurality of queues in a plurality of containers, said containers comprising said plurality of queues in and from which said packets are written and read and being respectively connected with corresponding output ports;
a read control step of determining, on a per container basis, a queue to read the packets from, reading said packets from the determined queue, and outputting said packets to said output ports,
wherein the read control step comprises:
a write queue information generating step of generating, on a per container basis, write queue information indicating the queues having the packets written therein;
a priority determining step of determining, on a per queue basis, priorities in the reading of the packets; and
a read queue determining step of determining, on a per container basis, said queue to read the packets from with reference to the write queue information and the priorities.

32. A packet transport program for implementing a packet transport method on a computer, said method comprising:
an input step of sorting a plurality of packets and accommodating said plurality of packets in a plurality of queues in a plurality of containers, said containers comprising said plurality of queues in and from which said packets are written and read and being respectively connected with corresponding output ports;
a read control step of determining, on a per container basis, a queue to read the packets from, reading said packets from the determined queue, and outputting said packets to said output ports,
wherein the read control step comprises:
a write queue information generating step of generating, on a per container basis, write queue information indicating the queues having the packets written therein;
a priority determining step of determining, on a per queue basis, priorities in the reading of the packets; and
a read queue determining step of determining, on a per container basis, said queue to read the packets from with reference to the write queue information and the priorities.
